Europäisches Patentamt

European Patent Office

Office européen des brevets

(19)

(11) Publication number:

**0 379 847**

**A1**

## (12) EUROPEAN PATENT APPLICATION

(21) Application number: 89830556.0

(22) Date of filing: 20.12.89

(51) Int. Cl.⁵: **F16H 29/20, F16H 29/04**

The title of the invention has been amended (Guidelines for Examination in the EPO, A-III, 7.3).

(30) Priority: 20.12.88 IT 2302488

(43) Date of publication of application:
**01.08.90 Bulletin 90/31**

(84) Designated Contracting States:
**BE CH DE ES FR GB LI NL SE**

(71) Applicant: **Federici, Leonida**
**Via privata Moroni, 7/A**
**I-20099 Sesto san Giovanni (Milano)(IT)**

(72) Inventor: **Federici, Leonida**
**Via privata Moroni, 7/A**
**I-20099 Sesto san Giovanni (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Continuously variable mechanical transmission.**

(57) A mechanical gear device for continuously changing the speed e.g of a motor vehicle comprises a variable eccentricity element (21; 84) coupled to an input shaft (A), means (13, 14, 17, 18) for changing the eccentricity or this element, means (T, 28, 31) for transforming the rotary movement of the variable eccentricity element into a linear reciprocating element and means (36, 37) for transforming this linear reciprocating movement into an unidirectional movement to be applied to an output shart (D).

Fig. 1

The present invention relates generally to the apparatus or transmissions for continuously changing the speed of a motor vehicle,which are arranged between the mechanical power source and utiliser and which afford the possibility of varying at will the output speed or torque or both these elements.

This speed changing devices,which are also called torque converters provide a continuous variation from a minimum to a maximum speed, that is without any speed discontinuity steps.

Known speed chaning apparatus generally pertain to several classes and, more specifically:
- hydraulic continuous speed changing devices which comprise hydraulic motors operated by blade hydraulic pumps and in which the gradual variation of rpm's or of the output torque is obtained by properly controlling or adjusting either the hydraulic motor or pump,or both these elements;
- electric continuous speed changing devices which generally use a 3-phase collector electrical motor in rich the gradual variation of the speed is obtain ed by controlling or adjusting the voltage applied to the electric motor,with a consequent variation of the transmitted power;
- friction continuous speed changing devices in which the coupling between the driving shaft and the driven shaft is provided by the friction force generated by suitably pressing a disc applied on the driving shaft against a roller applied on the driven shaft and in which the gradual speed variation is obtained by displacing the roller along the axis of the driven shaft,so as to vary the operating radius of the driving disc;
- belt continuous speed changing devices which comprise to parallel axis complementary cone members coupled by a flat belt and in which the speed variation is obtained by displacing the belt on the cone members; and
- chain continuous speed changing devices which comprise to bevel puppley pairs mounted on two facing parallel shafts and coupled by a trapezoidal belt.

The above mentioned hydraulic and electric continuous speed changing devices are very complex and large size apparatus,even if they have a comparatively reliable operation.

The above mentioned friction, belt and chain continuous speed changing devices,on the other hand,have the drawback that they require a rather high contact pressure on the belt or chain in order to provide an acceptable efficiency;moreover,in these devices, the losses due to passive resistances are comparatively high and the power which can be transmitted is poor,since it is not possible to fully eliminate noxious slippings between the driving and driven members,which are subjected to a quick wearing.

## SUMMARY OF THE INVENTION

The present invention sets out to overcome the above mentioned drawbacks by providing a gear continuous changing device which is very reliable in operation,has very reduced passive losses and a small size in relationship with the transmitted power.

According to one aspect of the present invention, the above mentioned objects,as well as yet other objects,which will become more apparent hereinafter, are achieved by a continuous speed changing device which is characterized in that said device comprises a variable eccentricity element, coupled to an input shaft,means for changing the eccentricity of said variable eccentricity element,means for transforming the rotary movement of said variable eccentricity element into a linear reciprocating element and means for transforming said linear reciprocating movement into an unidirectional rotary movement to be applied to an output shaft.

## BRIEF DESCRIPTION OF THE DRAWINGS

The present invention will be disclosed in a more detailed way with reference to two preferred embodiments and several modifications thereof,given by way of an indicative but not limitative example, and illustrated in the accompanying drawings, in which:

FIGURE 1 is a top plan view of a first embodiment of the gear speed changing device according to the invention;

FIGURE 2 is a side elevation view of the speed changing device;

FIGURE 3 is a rear elevation view of an eccentric disc of fig.1, with its frame and electromechanical means for changing the eccentricity of a pin element;

FIGURE 4 is a detail cross-sectional view of the eccnetric disc of fig.3;

FIGURE 5 is a partial cross-section view of a second embodiment of the mechanical eccentric element;

FIGURE 6 is a detail front view of fig.5;

FIGURE 7 is a top plan view of the detail of fig.6;

FIGURE 8 is a cross-section view,on an enlarged scale, taken along the line VIII-VIII of fig.6;

FIGURE 9 is a top plan partial view of a speed changing device according to the modified embodiment of fig. 5;

FIGURE 10 is a partial cross-section view of a modified embodiment according to fig.5,in which the means for changing the eccentricity of the eccentric means comprise two like eccentric or cam elements offset by 180° from one another in order to balance the system for making it suitable for a high rpm number;

FIGURE 11 is a partial view of a further modified embodiment according to fig.5,in which the means for changing the eccentricity comprise two identical adjoining eccentric or cam elements, which turn in reverse directions for symmetrically distributing the motive power;

FIGURE 12 is a plan top view of the subject speed changing device having means for changing the eccentricity of the eccentric element of fig.11;

FIGURE 13 is a front partial view of fig.14,taken along the line XIII-XIII of fig.14 and having the same function as the device of fig.11,but including facing eccentric elements in order to provide an action width corresponding to that of a single eccentric element;

FIGURE 14 is a top plan view showing the speed changing device provided with means for changing the eccentricity of the eccentric element shown in fig.13;

FIGURE 14A is a diagram illustrating by way of an example the transmission of the movement to the second eccentric element facing the first eccentric element of the speed changing device shown in fig.14;

FIGURE 15 is a view analogous to fig. 5, showing a third modified embodiment, partially cross-sectioned, of the means for changing the eccentricity with respect to the pin an constructed as an eccentric crank;

FIGURE 16 is a partial front view of fig.15;

FIGURE 17 is a schematic view of a limit electromagnetic device for the means for changing the eccentricity of the eccentric element shown in figs. 5 to 16; and

FIGURE 18 is a plan top view of a transmission system included in the embodiment of figs. 15 and 16.

## DESCRIPTION OF THE PREFERRED EMBODIMENTS

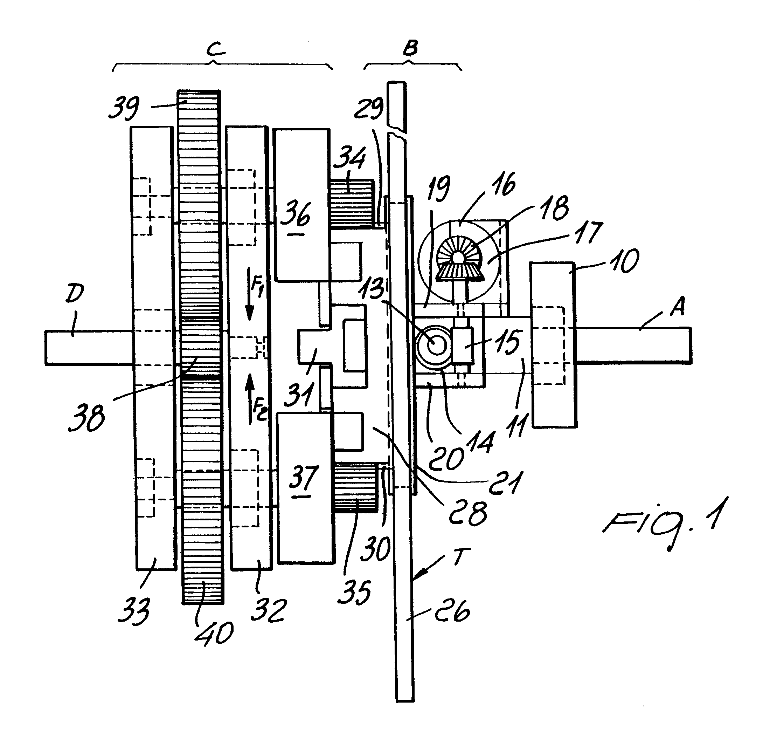

With reference to the figures of the accompanying drawings, the continuous gear speed changing device according to the present invention comprises substantially an input shaft A (figure 1), an assembly B for transforming the rotary movement of the input shaft A into a linear reciprocating movement and an assembly C for transforming this linear reciprocating movement into an unidirectional rotary movement to be transmitted to an output shaft D.

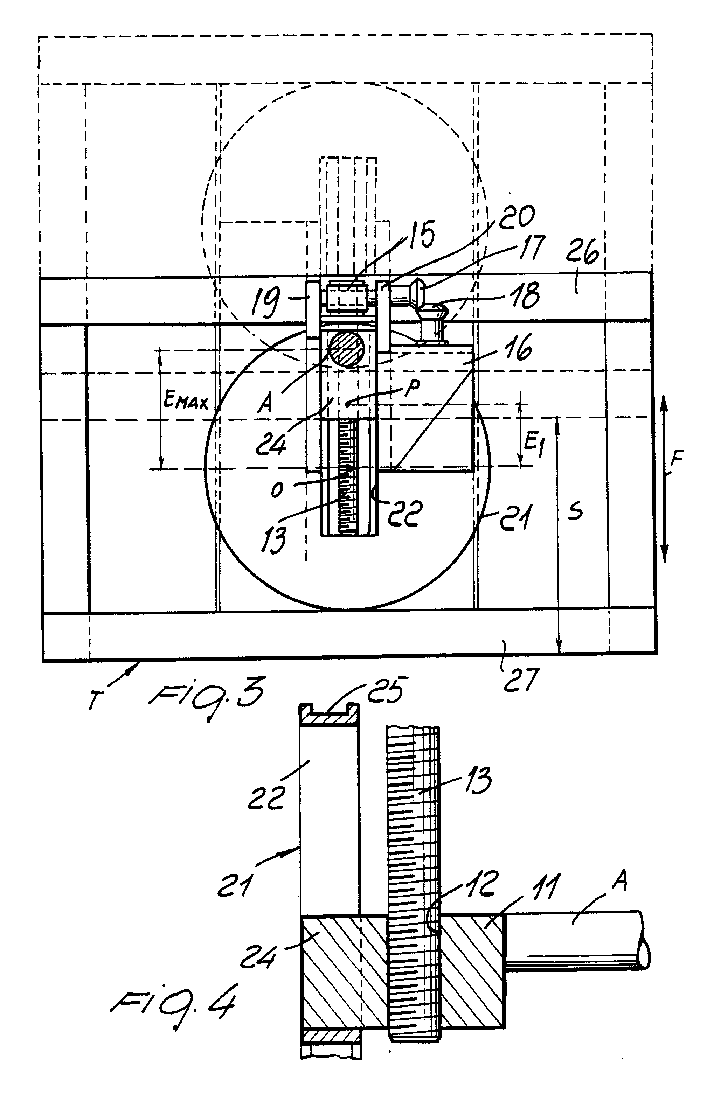

The inlet shaft A is supported rotatably by a supporting element 10 and projects from this supporting element by a rectangular cross-section portion 11 (figure 1) including a diametrical threaded hole 12(fig.4),provided for receiving a threaded rod 13 bearing at one end thereof a ring gear 14 (fig.1). The ring gear 14 meshes with a worm screw 15, driven by a reversible electric small motor 16 through a pair of bevel gears 17,18.The screw 15, threaded rod 13 and electric motor 16 assembly is coupled,by means of two parallel plates 19 and 20,to an eccentric or cam disc 21.This eccentric disc 21 is included in the assembly B and is provided with a radial slot (figs.3 and 4) therein engages the rectangular cross-section end portion 24 (fig.4) of the input shaft A rich operates as a slider to make it rotatively rigid with the eccentric disc 21. As the eccentric disc is rotatively driven,it will rotatively drive also the screw 15,theraded rod 13 and electric motor 16 assembly,which are made rigid therewith by the parallel plates 19 and 20.As shown, the eccentric disc 21 is also provided with a periphe ral groove 25 (fig.4) which receives at diametrically opposite points the two opposite main sides 26 and 27 of a rectangular frame T (fig.3).

On the front of the rectangular frame T there is affixed a plate 28 (fig.1) which is provided with two racks 29 and 30 extending on both vertical sides of said plate.A central column 31 (fig.1) operates to guide the plate 28 in its reciprocating upward and downward movement.

The assembly C comprises two supporting elements 32 and 33 which rotatably support two pignons 34 and 35 each of which engages with the related rack 29, respectively 30, said pignons 34,35 forming each the driving element of a free wheel 36, respectively 37.The supporting element 32 also supports a pignon 38 which is keyed on the output shaft D supported by the supporting element 33.The supporting elements 32 and 33 also cooperate to support therebetween two gear wheels 39 and 40 meshing with the pignon 38 and keyed on the driven shaft of the free wheels 36,37.

The above disclosed speed changing device operates as follows.

As the eccentric pin 24 is arranged at the centre of the disc 21, the input shaft turns, whereas the output shaft D is at rest since no eccentricity exists.If now, by operating the electric motor 16, the screw 15 is rotatively driven through the bevel gear pair 17,18 so as to cause the threaded rod 13 to be threaded on in the hole 12 (fig.4) formed in the rectangular cross-section portion 11 of the input shaft A, then the eccentric disc 21 will be mutually displaced with respect to the input shaft A,for example up to the point P and,with the eccentric disc 21, also the frame T and the plate 28 (fig.1) will be driven, said plate including rack members, and in this manner between the centre 0 of the disc and the point P an eccentricity F1 (Fig.3) will occur.Owing to this eccentricity F1 of the disc 21,as the disc is rotatively driven, the frame T will be rectilinerly reciprocated upward and downward, as indicated by the two-head arrow F in fig.3.This reciprocating movement of the frame T and accordingly of the racks 29,30 will be transformed again by the assembly C into an unidirectional rotary movement.During the lowering movement of the frame T,the rack 29 meshing with the pignon 34 (fig.1) will cause the latter to rotate in the direction of the arrow F1 and,since the free wheel is now engaged,it will transmit this rotary movement to the gear wheel 39, in the direction F1,which will cause the pignon 38 to turn in the reverse direction, that is in the direction F2,while turning the gear wheel 40 in the direction F1.Since the pignon 38 is keyed on the output shaft D,also the latter will turn in the direction F2.The pignon 35,meshing with the rack 30,during the downward movement of the frame T will turn in the direction of the arrow F2 and, since with such a turning direction, the free wheel 37 is not engaged,this rotary movement will be not transmitted to its driven shaft, thereby the gear wheel 40 will always turn in the turning direction F1 transmitted by the pignon 38.

During the raising movement of the frame T (fig.1) the turning directions of the pignons 34 and 35 will be reversed, thereby the free wheel 36 will be disengaged, whereas the free wheel 37 will be engaged, so that the pignon will turn now in the direction F1 and the free wheel 37 will transmit the rotary movement to the gear wheel 40 in the direction F1, which will cause the pignon 38 to turn in the direction F2 and the gear wheel 39 in the direction pignon 34 will turn in the direction F2 and, since with this rotary direction the free wheel 36 is disengaged,the gear wheel 39 will be not driven and it will normally turn in the direction F1 transmitted by the pignon 38.

The turning speed of the output shaft D will be proportional to the eccentricity E1.If now the eccentricity is gradually increased, the stroke of the frame T for each revolution of the disc 21 will be correspondingly increased.Thus,the rotary speed of the output shaft D will be further increased with respect to that of the input shaft A.With the maximum eccentricity Emax,when the pin 24 is arranged at the open end of the radial slot 22,the stroke S of the frame T for each revolution of disc 21 (fig.3) will be the greatest, and accordingly the output shaft D will turn with the maximum speed.

Accordingly, it should be apparent that, with the input shaft A which always turns with the same speed, the turning speed of the output shaft D can be changed from 0,thereat one has a zero eccentricity of the shaft A with respect to the disc 21 (Fig.4) to a maximum speed which corresponds to the eccentricity Emax of these elements, in a gradual manner by suitably controlling the electric motor 16.Since this motor is of the reversible type, one can gradually come back to the zero turning speed of the output shaft D.

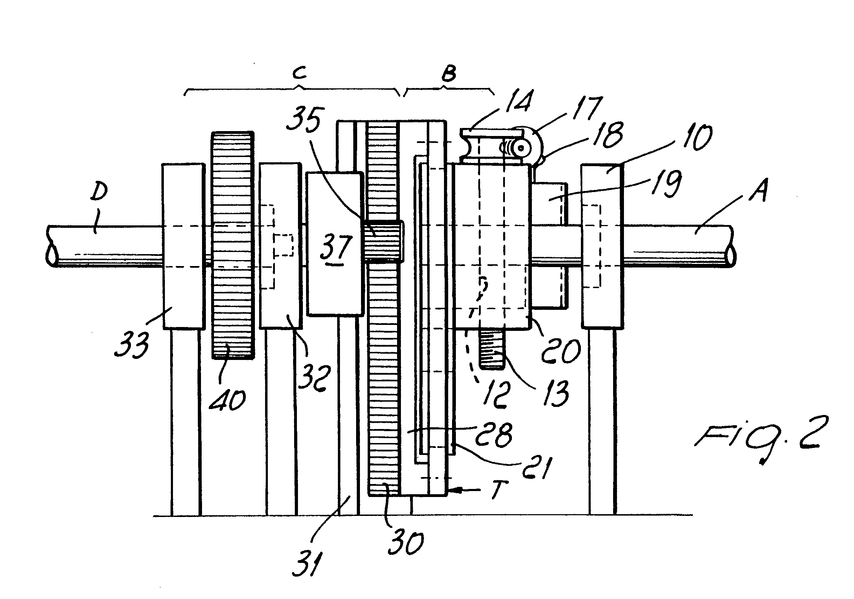

Figures 5 to 16 show a further embodiment of the invention in which the means for changing the eccentricity of the eccentric element comprise mechanical elements.For facilitating the understanding of these figures, the same number references used in figures 1 to 4 have been used herein.

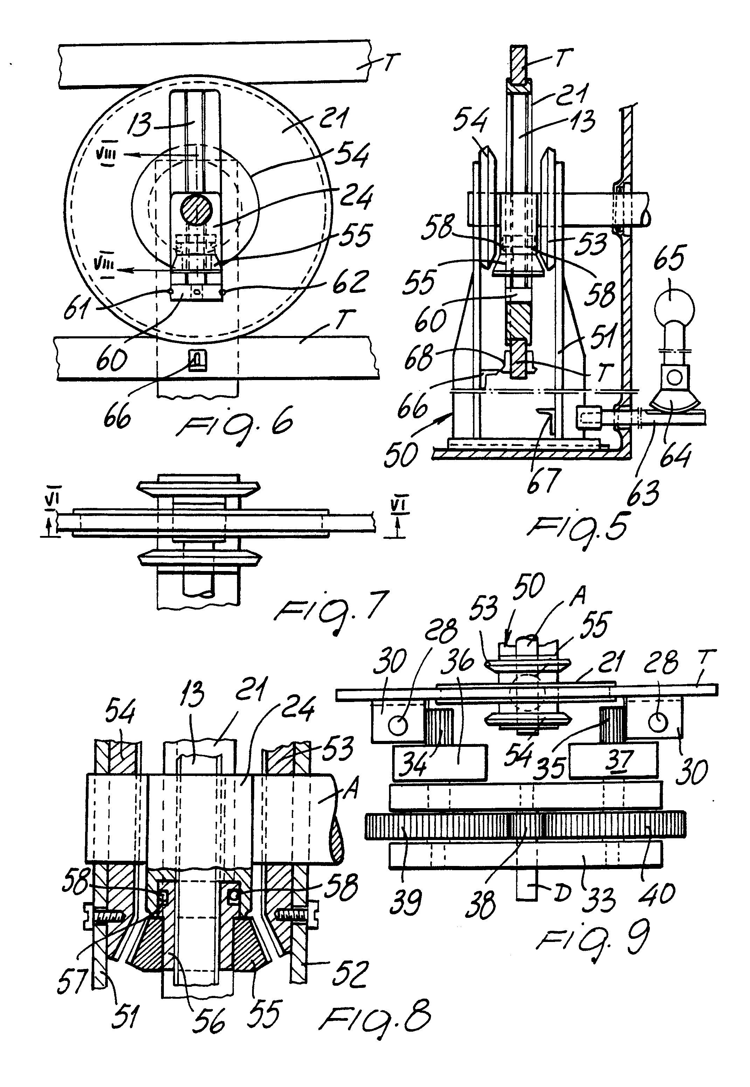

With reference to figures 5 to 9,a modified embodiment is herein shown of the means for changing the eccentricity of the eccentric element 21, comprising a slide indicated overally at 50 (fig.5), which comprises two side shoulders 51 and 52 (figures 5 to 8) therethrough rotatively passes the shaft A. Between the two fixed ring gears 53 and 54 there is arranged the rectangular cross-section portion 24 of the driving shaft A which receives the threaded rod 13 arranged in the radial slot 22 (figure 6) of the eccentric disc 21.On the bottom part of the rectangular cross-section portion 24 of the driving shaft there is provided a bevel pignon 55 provided with an endpiece hub 56 (Fig.8) with a circular slot 57.The hub 56 is received in a hollow formed in the rectangular cross-section portion 24 of the driving shaft and is rotatively held therein by means of two pins 58. The hole of the hub 56 of the pignon 55 is threaded and is screw engaged on the threaded rod 13 arranged in the slot 22 of the eccentric disc 21, therewith the threaded rod is made rigid by means of a dowel 59.A small block 60 arranged at the bottom end portion or the slot 22 of the eccnetric disc 21 is used for mounting the threaded rod 13 in its seat and is made in turn rigid to the eccentric disc 21 by two further dowels 61,62 (fig.6).On the sides of the pignon 55 there are arranged the fixed ring gears 53,54.The slide 50 can be reciprocated by means of a rack 63 therewith a toothed segment 64 of a lever 65 engages.

The eccentric disc 21 turns so as to rotatively drive the pignon 55 which, at the position shown in figures 5 to 9, does not engage neither with the fixed ring gear 54 nor with the fixed ring gear 53, thereby the eccentricity of the eccentric pin does not change.

If it is desired to change this eccentricity, then it will be sufficient to operate the lever 65 to cause the pignon 55 to engage either with the fixed ring gear 53 or the fixed ring gear 54, thereby the pignon 55 will turn either in a direction or in the opposite direction so as to displace the eccentric disc in a direction or in the opposite direction with respect to the drivign shaft A.

In order to cause,at the end of stroke position,the pignon 55 to automatically disengage from either fixed ring gear,pawls 66 and 67 are provided which are adapted to engage with an abutment element 68 provided on the rectangular frame T.

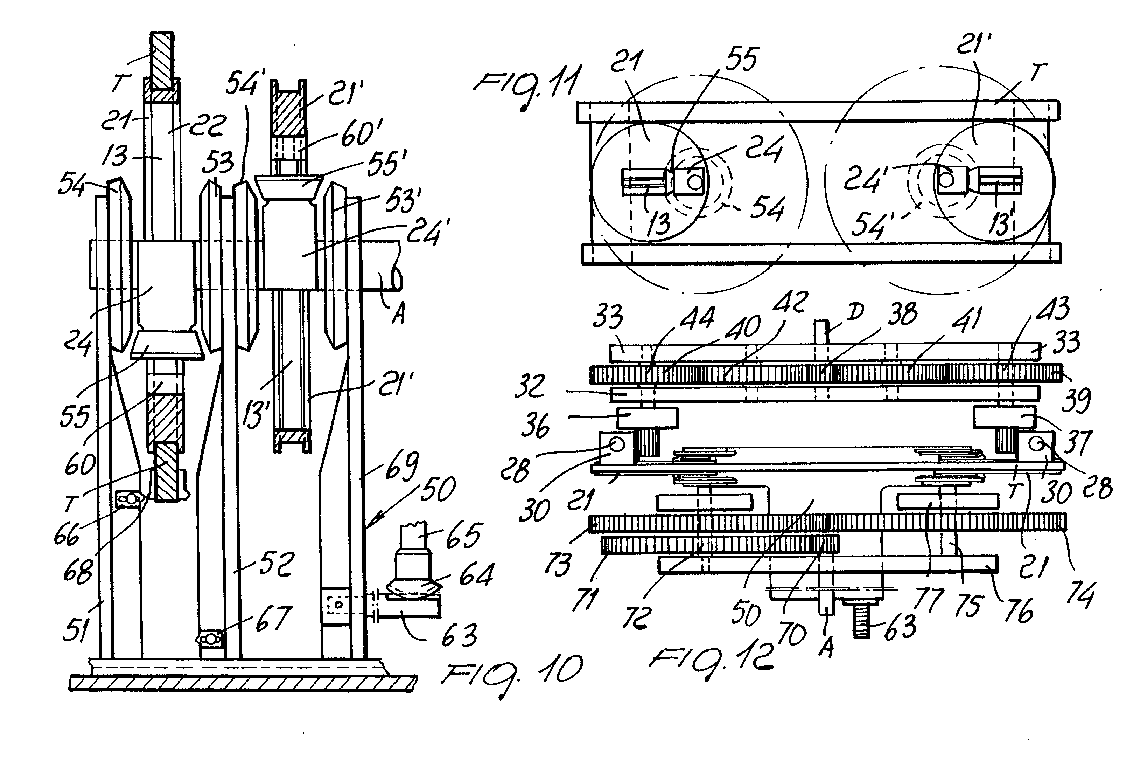

The speed changing device operating with this modified embodiment of the means for changing the eccentricity or the eccentric element is shown in figure 9 where, instead of a double tooth assembly single rack,as shown in figures 1 to 4, there are provided two racks 30 which can slide on guide uprights 28 and are arranged at the end portions of the frame T, so as to properly house the device comprising the fixed ring gears and the pignon.

For the remaining details, the subject speed changing device is held unchanged.

The free wheels 36,37 (figure 9) must have a diameter as great as possible,in order to provide their star wheels with a tooth number as great as possible so as to reduce to a minimum the operating range of the free wheels near the zero rpm's.Then, by displacing by 50% the teeth of the two racks,that is by causing the land portions of one rack to correspond with the hollow portions of the other rack, the pitch of the rack teeth will be reduced to a half, i.e the number of the teeth of the free wheels will be doubled.

Fig.10 shows a modified embodiment of the method for balancing the means for changing the eccentricity of the eccentric element.

This modified embodiment has been designed to perfectly balance the device even for a high rpm operation;this embodiment having a slightly larger length than the embodiment shown in figures 1 to 4 and in figures 5 to 9.

It comprises,in addition to the usual eccentric disc 21,a further eccentric rotary disc 21', which is mounted on the same driving shaft A and operates in a like manner to the disc 21,but in a diametrically opposite direction by means of a single slide 50 which comprises,in addition to the two side shoulders 51, 52 also a third outer shoulder 69.

The means for changing the eccentricity of the pin are fully indentical to those shown in figures 5 to 9.While the rectangular cross-section portion 24 of the driving shaft A having the bevel pignon 55 pertaining to the eccentric disc 21 of the frame T downward extends, the rectangular cross-section portion 24' having the bevel pignon 55' pertaining to the eccentric disc 21' without frame upward extends, that is in an opposite direction.Thus, it should be apparent that this system comprises two facing eccentric discs, operating in opposite ways, so as to perfectly balance the rotary masses.

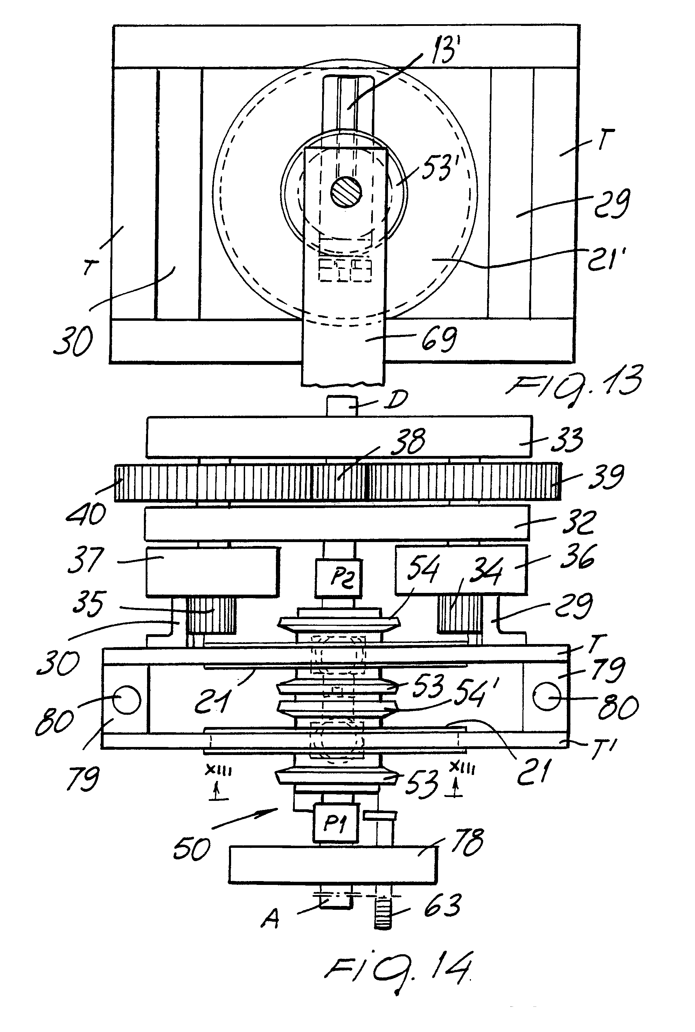

Fig.11 shows the means for changing the eccentricity of the eccentric element comprising two adjoining eccentric discs, with a double width.The two eccentric discs 21 and 21' will turn in opposite directions as shown by the arrows F3 and F4, in the frame T which,in this case,has a double length so as to symmetrically distribute the driving force.In this embodiment there are provided four ring gears 53,54 and 53',54' of which the ring gears 53 and 54 can engage with the pignon 55 (fig.12) and the ring gears 53' and 54' can engage with the pignon 55' as,by operating the lever 65, the slide 50 (fig.12) is rightward or leftward displaced, as in the case shown in figures 5 to 9.

Figure 12 shows the speed changing device with the two eccentric discs 21,21' shown in fig.11. In this case, in order to properly house the slide 50 and the two fixed ring gear pairs, the driving shaft A is provided at its end with a pignon 70 meshing with a ring gear 71 keyed on an axle 72 which forms the shaft of the eccentric disc 21 and extends through the two fixed ring gears 53 and 54.On this axle 72 there is further keyed another gear wheel 73 engaging with a like gear wheel 74 in turn keyed on an axle 75 which forms the shaft of the eccentric disc 21' and which extends through the other two fixed ring gears 53',54'.The two axles 72 and 75 are supported on supporting elements 76 and 77.For the remaining details this device is like that shown in fig.9,with the exception that the gear wheel 39 is keyed on the axle 43 of the free wheel 37 and the gear wheel 40 is keyed on the axle 44 of the free wheel 36 and the pignon 38 is driven by the gear wheels 39 and 40 through the gear wheels 41 and respectively 42 supported by the supporting elements 32 and 33. The provision of these wheels allows a larger speed ratio range for the output shaft D.

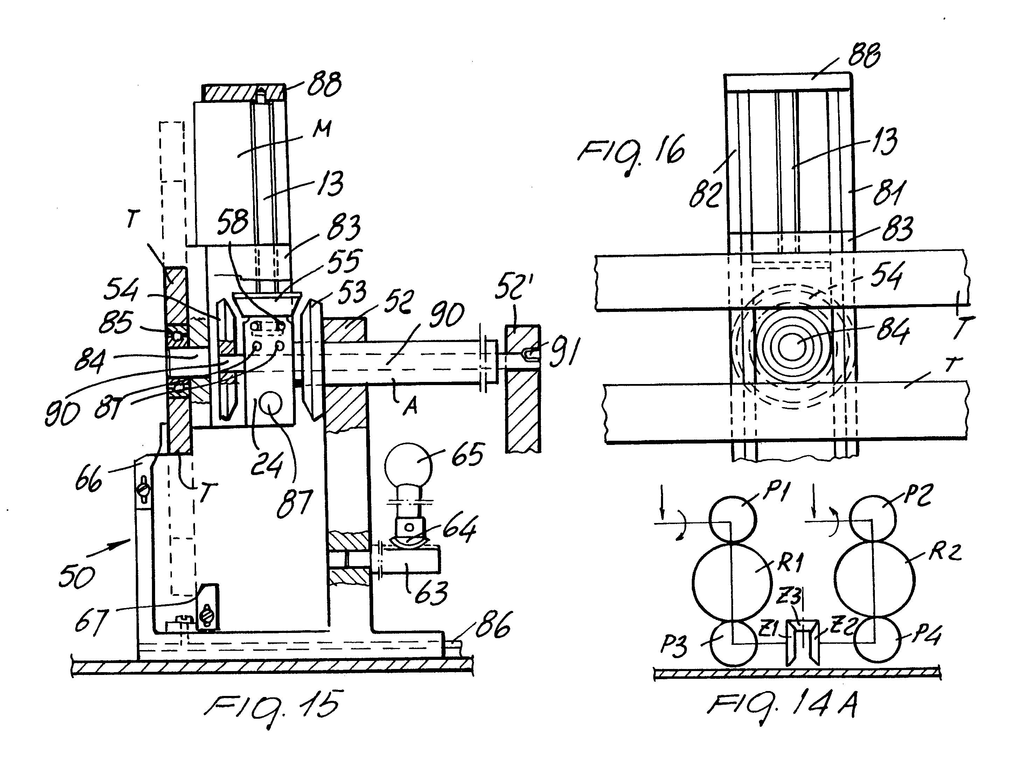

Figures 13 and 14 show respectively,by a front view taken along the line XIII-XIII of figure 14 and a plan view, the same devices for changing the eccentricity of two eccentric elements (fig.11), the eccentric elements being arranged facing one another and rotating in opposite directions,so as to hold the width increase to a minimum, with a length dimension equal to that of the single eccentric element shown in fig.9.

In fig. 14,the coaxial shafts A and D are rotatably supported on a front supporting element 78, a rear supporting element 32 and,at the centre thereof, on the sliding supporting element of the fixed gear wheels 53 and 54',where said shafts can be removably detached in order to allow for the two eccentric elements to reversely turn respectively in their frames T' and T.The transmission of the driving power from the shaft A to the shaft D, which turns in an opposite direction,can be provided by the device schematically shown in figure 14A, where the pignon P1 keyed on the shaft A drives with a 1:1 ratio in an opposite direction the pignon P2 keyed on the shaft D. In fact the pignon P1 engages with a gear wheel R1 engaging with a pignon P3 identical to the pignon P1 and the axle of which drives a gear wheel Z1. The pignon P2 is identical to the pignon P1 and engages with a gear wheel R2 identical to the gear wheel R1. The gear wheel R2 engages with a pignon P4 identical to the pignon P2, the ace of which bears a gear wheel Z2. The two gear wheels or ring gears Z1 and Z2 are facing one another and mutually engage through a ring gear Z3.The two frames are coupled by two end spacers 79 which can slide on uprights 80.The frame T' is provided with the two racks 29 and 30 which engage with the pignons 34 and 35 of the free wheels 36 and 37.For the remaining details this arrangement is equal to that shown in figure 1.

Figures 15 and 16 show a third modified embodiment of the means for changing the eccentricity of the pin which,in this embodiment,comprise a crank M.This crank M,of any suitable shape, can comprise two side plates 81,82 removably coupled to the rectangular cross-section portion 24 of the driving shaft A by means of bolts 87 and 58.The two side plates 81 and 82 are affixed at the top to a cover member 88 in which is rotatively housed the top end portion of the threaded rod 13.

In the longitudinal slot 89 of the crank arm a L-shaped slider 83 can slide which supports the crank pin 84 rotatively in a ball bearing 85 which engages at the centre portion of the frame T so as to cause the latter to vertically reciprocate up to the two end of stroke positions shown by the dashed line. stroke of the frame T,in particular, depends on the movement of the slider 83 which is driven by the rotary threaded rod 13. The threaded rod 13 is formed in a single piece with the bevel pignon 55 and accordingly it will be rotatively driven by this pignon either clockwise or anticlockwise.The vertical displacement of the crank pin 84 is obtained through the slider 83 which is either upward or downward displaced along the threaded rod 13 as the pignon 55 is rotatively driven either in the clockwise or in the anticlockwise direction.Also in this embodiment the pignon 55 is turned by operating the lever 65 which,through the rack 63,displaces the slide 50 either leftward or rightward along the guide 86, so as to cause the bevel pignon 55 to engage with either the fixed ring gear 53 or the fixed ring gear 54.The driving shaft A passes through the shoulder 52 of the slide 50 and the fixed ring gear 53 and ends with the rectangular cross-section portion 24.In this embodiment, the driving shaft A is hollow and through the bore thereof a tie rod 90 passes which is made rigid with another shoulder 52' of the slide 50 (fig.15), by a dowel 91.This tie rod, which operate to affix the ring gear 54, extends through the portion 24 and the fixed ring gear 54 which is coupled to it. In order to allow for the shoulder 52' to be fitted it is indispensable to use the driving shaft A transmission system shown in fig.18,This system provides moreover the possibility of changing the input rpm's of the changing device in a very broad range. In this embodiment there are also provided limit pawls 66 and 67 for disengaging the fixed ring gear from the bevel pignon 55 as the frame T performs its maximum stroke.The transmission system comprises a supporting element 92 for the driving or input shaft A,which bears at one end thereof a pignon 93. This pignon 93 engages with a gear wheel 94 keyed on an end of the shaft 95.On the other end of the shaft 95 there is keyed a pignon 96 meshing with a gear wheel 97 supported by a supporting element 98.The shaft 95 is supported on the supporting elements 92 and 98.At 99 there is shown the supporting plate rigid with the central rod of the fixed ring gear 53 and at 100 there is indicated a driving means for driving the central rods of the fixed ring gears 53 and 94.

The crank M provides the advantage, with respect to the eccentric disc, that, the stroke being the same, the height is approximatively a half since, while with the eccentric disc the stroke,which is twice the eccentricity,always adds to the diameter of the eccentric disc,with the crank M the stroke is only twice the maximum rotary radius of the crank pin 84.

In this connection it should be apparent that two opposite cranks can also be provided (not shown) axially aligned and turning in opposite directions, in order to symmetrically distribute the driving force.In this case the driving power will be transmitted necessarily as shown in the diagram of fig.18.

With respect to the balancing method, the provision of the tie rod 90 of fig.15 does not allow a double crank to be used.The balancing,however,can be obtained by increasing the length of the crank arm at the opposite side.A second bevel pignon 55, on the opposite side to the first pignon of fig.15 of the rectangular portion of the shaft A with its related screw 13 which displaces in the opposite direction a mass equal to the slider 83 and related bearing.

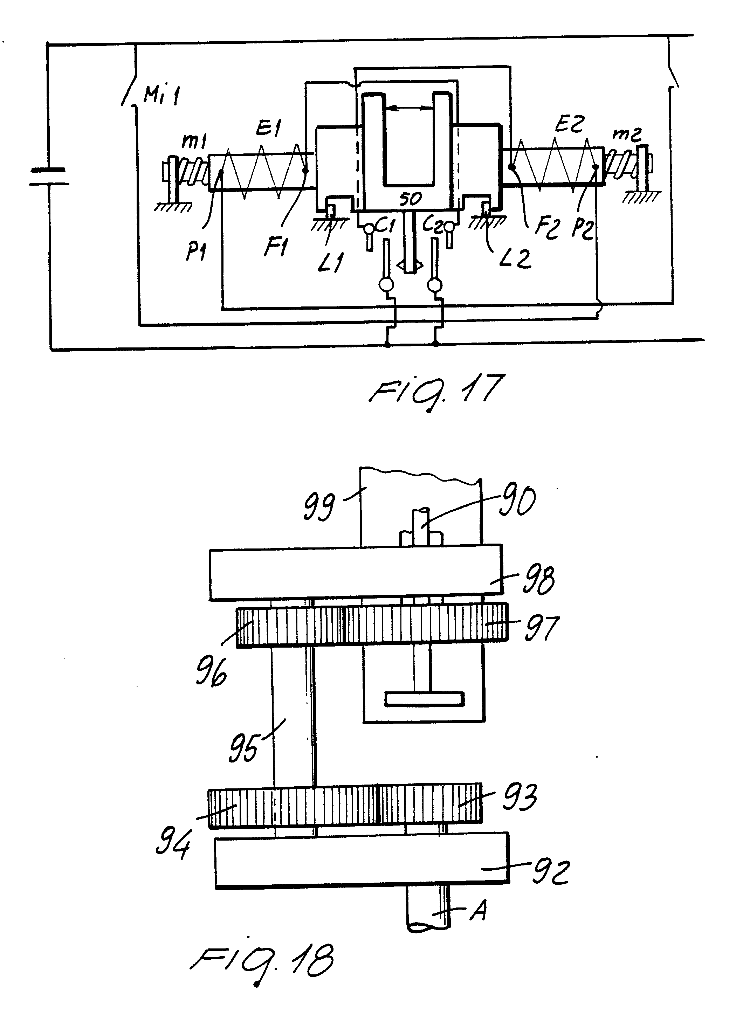

Figure 17 shows a bidirectional electromagnetic limit device which is used for providing an instantaneous stopping of the eccentricity variation at the end of stroke position,to prevent the bevel pignon 55 from partially engaging with the fixed ring gears 53 and 54. In fig.17 there is indicated at 50 the slide for the fixed ring gears.Mi1 and Mi2 show two microswitches,E1 and E2 are two electromagnets,L1 and L2 two stop elements for the electromagnets,m1 and m2 are springs for allowing for the electromagnets to be displaced as driven by the slide 50 under the control of the lever 65, either leftward or rightward, and C1 and C2 shows two contactors.This device operates as follows.

As the slide 50 is in its leftmost position, the contactor C1 is closed and the contactor C2 is open.The slide can be rightward displaced through Mi1 and E2.The circuit which is established will be: Mil-P2-E2-F2-C1-second pole.

As the slide 50 is in its rightmost position, the contactor C1 is open and the contactor C2 is closed.The slide can be leftward displaced through Mi2-E1. The circuit which will be established will be: Mi2-P1-E1-F1-C1-second pole.

While the invention has been disclosed and illustrated with reference to preferred embodiments thereof, it should be apparent that the disclosed embodiments are susceptible to several modifications and variations all of which will come within the spirit and scope of the appended claims.

## Claims

1- A mechanical gear speed continuously changing device characterized in that said device comprises a variable eccentricity element,coupled to an inlet shaft,means for changing said element eccentricity,means for transforming the rotary movement of said variable eccentricity element into a linear reciprocating movement and means for transforming said linear reciprocating movement into an unidirectional rotary movement for application to an output shaft.

2- A device according to claim 1,characterized in that said variable eccentricity element comprise a disc with a radially displaceable eccentric pin.

3- A device according to claim 1,characterized in that said variable eccentricity element comprise a variable-arm crank.

4- A device according to claim 1,characterized in that said means for changing the eccentricity of said variable eccentricity element are of mechanical type.

5- A device according to claim 1,characterized in that said means for changing the eccentricity of said variable eccentricity element are of a hydraulic type.

6- A device according to claim 4,characterized in that said means for changing the eccentricity of said variable eccentricity element comprise a threaded rod engaged in a threaded hole of said inlet shaft and actuated by a reversible electric motor through a worm screw-worm wheel assembly.

7- A device according to claim 4,characterized in that said means for changing the eccentricity of said variable eccentricity element comprise a slide supporting at least two fixed ring gears provided for engaging a bevel pignon supported on said inlet shaft and rotatively engaging with a threaded rod engaged in a threaded hole of said inlet shaft so that as said bevel pignon engages with a said fixed ring gear said threaded rod will turn in a direction, while as said bevel pignon engages with the other of said fixed gear wheels,the threaded rod will turn in an opposite direction.

8- A device according to claim 1, characterized in that said means for transforming the rotary movement of said variable eccentricity element into said linear reciprocating movement comprise a frame arranged diametrically of said variable eccentricity element and provided with racks.

9- A device according to claim 1,characterized in that said device further comprises two moving mass balancing eccentric discs,said discs facing said means for changing the eccentricity of eccentric pin means, said slide being provided with two fixed ring gear pairs,one for each eccentric disc.

10-A device according to claim 8,characterized in that said frame is adapted to fit two adjoining eccentric discs with the means for changing the eccentricity of a disc being arranged opposite to one another, said slide being provided with two pairs of fixed ring gears,one for each eccentric disc.

11-A device according to claim 1, characterized in that said means for transforming said linear reciprocating movement into said unidirectional rotary movement comprise racks engaging with free wheels operating,as driven members,on said output shaft through the interposition of gear wheels.

12-A device according to claim 1,characterized in that said device further comprise limit means for disengaging the means for changing the eccentricity of said eccentric pin means as said pin means arrive either at a maximum or at a minimum eccentricity.

13- A device according to claim 12,characterized in that said limit means are of a mechanical type.

14- A device according to claim 12,characterized in that said limit means are of an electromagnetic type.

Fig.1

EP 0 379 847 A1

Fig. 2

EP 0 379 847 A1

Fig. 3

Fig. 4

Fig. 6

Fig. 5

Fig. 7

Fig. 8

Fig. 9

FIG.11

FIG.12

FIG.10

FIG. 13

FIG. 14

FIG. 15

FIG. 16

FIG. 14A

EP 0 379 847 A1

Fig. 17

Fig. 18

European Patent Office

**EUROPEAN SEARCH REPORT**

Application Number

EP 89 83 0556

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A- 243 427 (A. GAVAGE) * Figures 1,2; page 1, lines 8-34; page 2, lines 3-59 * | 1,3,4,8,11 | F 16 H 29/20 F 16 H 29/04 |
| Y | | 2,5,6 | |
| Y | GB-A- 5 849 (J.M. JUSTICE)(A.D. 1914) * Figure 3; page 2, lines 32-42 * | 2 | |
| Y | FR-A-2 406 134 (POWER-MATIC) * Figure 14; page 16, lines 16-35 * | 5 | |
| Y | FR-A- 800 915 (CHERTEMPS) * Figure 1; page 3, lines 81-96 * | 6 | |
| A | FR-A- 56 310 (CHENILLAT) * Figure 1; page 2, column 1, lines 10-33 * | 7,10 | |
| A | US-A-4 182 203 (M.C. DURY) * Figures 1-9; abstract; claims 1-19 * | 9 | TECHNICAL FIELDS SEARCHED (Int. Cl.5) |
| A | GB-A- 132 628 (DUNN) * Fig.; page 1, lines 9-17; page 5, lines 15-53 * | 9,10 | F 16 H |
| A | GB-A- 843 549 (BERTIN) * Figures 5,7; claims 1,3,9,10,17,18,19 * | 1,4,5,12,13 | |

The present search report has been drawn up for all claims

| Place of search | Date of completion of the search | Examiner |
|---|---|---|
| THE HAGUE | 22-03-1990 | VINGERHOETS A.J.L. |

EPO FORM 1503 03.82 (P0401)